# EUROPÄISCHE PATENTSCHRIFT

(11) **EP 0 917 267 B1**
(45) Veröffentlichungstag und Bekanntmachung des Hinweises auf die Patenterteilung: **23.07.2003**
(21) Anmeldenummer: 98107747.2
(22) Anmeldetag: 28.04.1998
(51) Int. Cl.: H02B 1/18, H01H 85/20

(54) **Sicherungssockel**
Fuse socket
Douille de fusible

(30) Priorität: 17.11.1997 DE 29720358 U
(43) Veröffentlichungstag der Anmeldung: 19.05.1999
(73) Patentinhaber: Tyco Electronics Raychem GmbH, 85521 Ottobrunnn (DE)
(72) Erfinder: Kunzmann, Jens-Peter, 13088 Berlin (DE); Valerius, Jörg, 13057 Berlin (DE); Heise, Wolfgang, 12559 Berlin (DE); Baschin, Gerhard, 12305 Berlin (DE); Pfeiffer, Bernhard, Dr., 12309 Berlin (DE)
(74) Vertreter: Alber, Norbert, Dipl.-Ing.

(56) Entgegenhaltungen:
- DE-A- 2 505 353
- DE-C- 412 934
- DE-C- 961 728
- DE-C- 968 022
- DE-U- 1 788 097
- DE-U- 1 837 177
- DE-U- 7 006 718
- DE-U- 8 609 086

## Beschreibung

### Anwendungsgebiet

Die Erfindung betrifft einen Sicherungssockel, wie er bei elektrischen Anschlußeinheiten, beispielsweise dem Einbaublock in einem elektrischen Anschlußkasten, häufig verwendet wird.

### II. Technischer Hintergrund

Der Sicherungssockel dient zum Einsetzen eines Sicherungseinsatzes in einen Strompfad, wobei der eingesetzte Sicherungseinsatz elektrisch leitend mit einem Zugang und einem Abgang verbunden wird, während der Hauptkörper, in dem dieser Sicherungseinsatz mechanisch gehalten wird, aus einem elektrisch isolierenden Material besteht.

Bekannt ist es, derartige Sicherungssockel, welche oft aus Kunststoff bestehen, auf einem Einbaublock zu befestigen, indem der Sicherungssockel bzw. dessen Hauptkörper mit dem ihn tragenden Bauteil, z. B. einem Einbaublock, verschraubt wird oder einstückig mit diesem ausgebildet ist. Auch die Gewindehülse, die ebenfalls aus elektrisch leitendem Material besteht und meist mit dem elektrischen Abgang leitend verbunden ist, befindet sich dabei auf der oberen Stirnfläche des in etwa zylindrischen Hauptkörpers, und ist meist ebenfalls mit diesem verschraubt.

In dem von oben her zugänglichen Sicherungsraum. in dem der Sicherungseinsatz im montierten Zustand hineinragt, wird zusätzlich meist ein Hülsenpaßeinsatz eingelegt, dessen Höhe und Durchmesser sich nach der Dimension des zu verwendenden Sicherungseinsatzes richtet, um dadurch ein und denselben Sicherungssockel für unterschiedliche Sicherungsgrößen benutzen zu können.

Da der Hülsenpaßeinsatz, welcher in der Regel aus einer zylindrischen Hülse mit beidseits radial nach außen abstrebendem stirnseitigen Rand besteht, und ebenfalls aus einem elektrisch leitenden Material, in der Regel Blech, in definierter geometrischer Lage gegenüber dem Sockel gehalten werden muß. sind zusätzliche Halteelemente, meist Haltefedern, für diese Fixierung vorzusehen. Diese Haltefedern oder Halteelemente sind bisher meist separate Bauteile, die bei der Montage des Sicherungssockels mit eingelegt werden müssen.

Der Hauptkörper des Sicherungssockels bestand bisher aus Kunststoff oder Keramik, vor allem deshalb, um entweder den Hauptkörper einstückig mit dem ihn tragenden Bauteil, etwa dem Einbaublock eines Anschlußkastens. zusammen ausbilden zu können, oder, um auf einfache Art und Weise die Verschraubung gegenüber diesem Einbaublock bzw. gegenüber der Gewindehülse vornehmen zu können, indem in bekannter Weise selbstschneidende Schrauben in eine Sacklochöffnung des Kunststoffes eingedreht wurden.

Die bisherige Vorgehensweise beinhaltet jedoch zumindest zwei Nachteile:

Zum einen sind die durchzuführenden Verschraubungen, die bei der Montage vorgenommen werden müssen, zeitaufwendig und schwierig durchzuführen, insbesondere schwer automatisierbar.

Zum anderen hat ein aus Kunststoff bestehender Hauptkörper den Nachteil, daß im Falle einer zu starken Temperaturentwicklung in dem betreffenden elektrischen Aggregat der Hauptkörper aus Kunststoff sich verformen kann, und dadurch ein Kontaktkraftverlust des Sicherungseinsatzes und in der Folge eine unerlaubte Erwärmung durch den erhöhten Spannungsabfall entstehen kann. Weiterhin waren die bisherigen Sicherungssockel in ihrer geometrischen Auslegung in der Regel nur auf ein oder wenige sie aufnehmenden Bauteile, beispielsweise Einbaublöcke, abgestimmt, oder gar einstückig mit diesen ausgebildet.

Im ersteren Fall bedeutet dies, daß eine größere Anzahl unterschiedlich gestalteter Sicherungssockel für die Palette eines Herstellers zur Verfügung gestellt werden muß, und im letzteren Fall bedeutet dies, daß bei jeder neuen Form für einen z. B. Einbaublock die verschiedenen Sicherungssockel in der Form einstückig mit ausgebildet werden müssen, was die Formkosten für die Erstellung der Form eines solchen Einbaublocks stark erhöht.

Anzustreben ist daher die Ausführung der Sicherungssockel als separates, leicht auf dem Einbaublock zu montierendes Bauteil, wobei eine Bauform eines Sicherungssockels möglichst universell an unterschiedlichen Einbaublöcken und auch anderen elektrischen Bauteilen verwendbar sein sollen.

Die DE 70 06 718 beschreibt einen Sicherungssockel 1, in den eine Paßhülse 3, wie z. B. in Fig. 4 offenbart, einsetzbar ist. Die Paßhülse 3 ist mit einer Feder 4 im Sicherungssockel 1 rastend gehaltert. Über eine rastende Befestigung des Sicherungssockels 1 selbst an einem weiteren Bauteil ist hier nichts offenbart. Des weiteren weist der Sicherungssockel 1 dementsprechend auch keine Hakendurchbrüche für an weiteren Bauteilen angeformte Rasthaken auf.

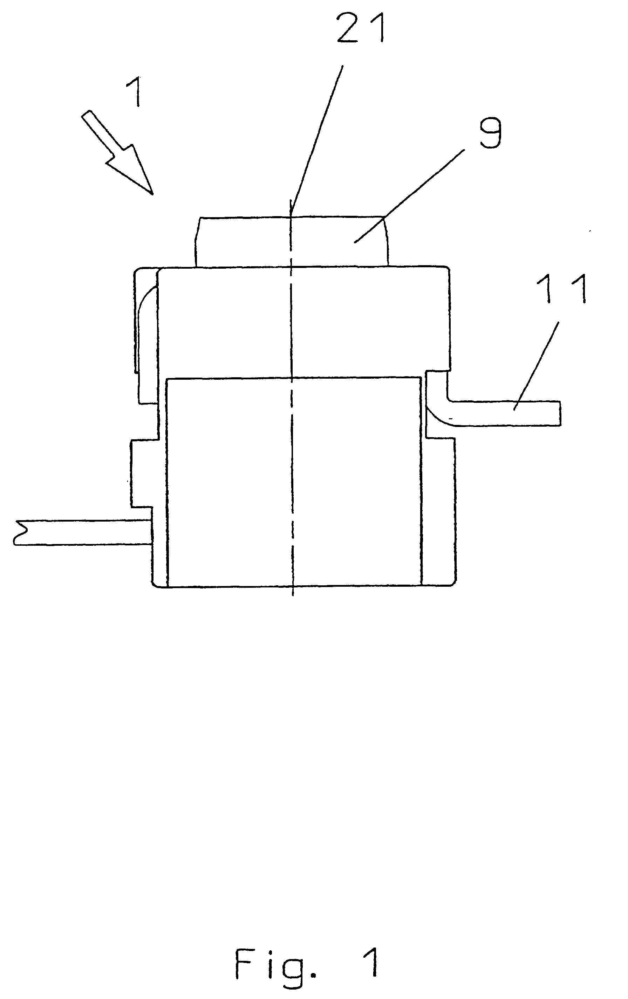

Die DE 25 05 353 beschreibt einen Sicherungssockel 21, in den seitlich eine Fußkontaktschiene 23 einschiebbar ist. Der Sicherungssockel 21 ist mit einer Schnappfeder 25 zur Festlegung auf einer Normprofilschiene 26 ausgestattet, wie in Fig. 1 und Seite 5, 1. Absatz, offenbart. Diese Normprofilschiene 26 verfügt über keine zumindest teilweise bewegbaren Rastnasen. Ebenso verfügt der Sicherungssockel 21 über keine Hakendurchbrüche.

Die DE 412 934 offenbart eine Paßhülse 5, die mit Federn 4 in einem umgebenden Sockel gehaltert ist. Über eine rastbare Befestigung des die Paßhülse 5 umgebenden Sockels an einem weiteren Bauteil ist hier nichts offenbart.

### III. Darstellung der Erfindung

### a) Technische Aufgabe

Es ist daher die Aufgabe gemäß der Erfindung, einen Sicherungssockel zu schaffen, der einfach und kostengünstig, insbesondere aus wenigen Einzelteilen bestehend, aufgebaut und dennoch schnell und universell, insbesondere in unterschiedlichen Einbaulagen und Einbauvarianten, an den ihn aufnehmenden Bauteilen montiert werden kann.

Zusätzlich soll dabei die Möglichkeit gegeben sein, den Hauptkörper des Sicherungssockels aus einem sehr hochschmelzenden Material, insbesondere Keramik oder Porzellan, herstellen zu können, was ausreichende Wandstärken erfordert.

### b) Lösung der Aufgabe

Diese Aufgabe wird durch die kennzeichnenden Merkmale des Anspruchs 1 gelöst. Vorteilhafte Ausführungsformen ergeben sich aus den Unteransprüchen.

Durch die Befestigung von Hauptkörper und Hülsenpaßeinsatz mittels Rasten gegeneinander wird eine zeitaufwendige Verschraubung vermieden. Durch die Ausbildung der Rastnasen am aufnehmenden Bauteil, etwa einem Einbaublock, während die Gewindehülse lediglich die entsprechenden Gegenflächen in Form eines z. B. radialen Flansches aufweisen muß und der Hauptkörper z. B. die Auflagerfläche für die Gewindehülse bietet, kann der Hauptkörper aus einem unelastischen Werkstoff wie Keramik oder Porzellan erstellt werden.

Würden federnde Elemente wie Rastnasen etc. dagegen an diesem Hauptkörper ausgebildet werden müssen, wie dies etwa für die Haltenasen für den Hütsenpaßeinsatz aus der DE 195 37 076 bekannt ist, müßten diese elastischen Elemente entweder als separates Bauteil gegenüber einem Hauptkörper aus unelastischem Material wie Keramik separat befestigt werden, oder der Hauptkörper muß aus elastischem, jedoch auch nicht schmelzsicheren, Kunststoff bestehen.

Dadurch, daß die Rastnasen am aufnehmenden Bauteil ausgebildet sind, wird ein zusätzlicher Montageschritt für den Hülsenpaßeinsatz für dessen Befestigung, egal ob sie mittels Verschraubung oder Verrastung realisiert ist, eingespart.

Dadurch, daß die Schienenöffnung zum seitlichen Einführen der elektrisch leitenden Fußkontaktschiene in den Sicherungsraum des Hauptkörpers so dimensioniert ist, daß auch eine Winkelabweichung der Fußkontaktschiene gegenüber dem Hauptkörper möglich ist, kann der Sicherungssockel nicht nur in einer bestimmten Winkellage, sondern innerhalb eines durch die Dimensionierung der Schienenöffnung vorgegebenen Winkelsegmentes in unterschiedlichen Drehlagen in den z. B. Einbaublock eingesetzt werden.

Die schräge Zuführung einer Fußkontaktschiene gegenüber der Abgangsrichtung von dem Sicherungssockel ermöglicht es, bei den bei Einbaublöcken häufig gegebenen Platzproblemen, bei der Notwendigkeit von mehr als zwei Sicherungssockeln auf dem Einbaublock, diese raumsparend gegeneinander versetzt anzuordnen, ohne für diese Variante einen speziell gestalteten Sicherungssockel zu benötigen.

Gegen ein Abheben vom tragenden Bauteil, etwa einem Einbaublock, ist der Hauptkörper durch ein auf dem z. B. Einbaublock befestigtes, den Hauptkörper übergreifendes, Oberteil gesichert.

Durch die Verbindung der Gewindehülse gegenüber dem Hauptkörper mittels eines Bajonettverschlusses, welcher meist einer axialen Vorspannung ausgesetzt ist, wird eine schnelle Montage der Gewindehülse ermöglicht.

Durch lagesymmetrische Ausbildung der Gegenflächen für den Bajonettverschluß der Gewindehülse am Hauptkörper um 180° kann die Gewindehülse in zwei diametral gegenüberliegenden Montagelagen montiert werden. Falls die Bajonettflächen mehrfach an dem Hauptkörper ausgebildet sind, oder statt zwei drei Bajonettelemente an der Gewindehülse ausgebildet sind, sind auch mehr als zwei Montagepositionen möglich. Dies ist dann sinnvoll, wenn die Abgangsfahne zum Befestigen der Abgangsklemme des Sicherungssockels an einem der Bajonettelemente der Gewindehülse ausgebildet ist, und die Montagelage der Gewindehülse am Hauptkörper somit auch über die Richtung, in welcher die Abgangsklemme vom Sicherungssockel abragt, entscheidet.

Wenn ferner die Gegenflächen, die von den Bajonettelementen der Gewindehülse hintergriffen werden, am Außenumfang des Hauptkörpers, und zwar in dessen oberen Bereich angeordnet sind kann zusätzlich der Hauptkörper in dem darunter liegenden Bereich seines Außenumfanges außen im Durchmesser verringert, zumindest an zwei gegenüberliegenden Seiten in einem Horizontalschnitt betrachtet abgeflacht werden.

Gegenüber einer Durchmesserverringerung über den gesamten Außenumfang bieten diese Abflachungen nur an zwei gegenüberliegenden Seiten den Vorteil, daß nicht über den gesamten Umfang die Wandstärke des Hauptkörpers so stark verringert wird, daß hierdurch insgesamt Beschädigungen zu befürchten sind.

Die Abflachungen am Außenumfang bieten jedoch den Vorteil, daß relativ nahe neben dem Hauptkörper des zu betrachtenden Sicherungssockels Stromschienen. insbesondere die Fußkontaktschiene für andere Sicherungssockel, entlanggeführt werden können, was bei den beengten Platzverhältnissen eines Einbaublocks äußerst hilfreich ist.

### c) Ausführungsbeispiele

Eine Ausführungsform gemäß der Erfindung ist im folgenden anhand der Figuren beispielhaft näher beschrieben. Es zeigen:
- Fig. 1:: den Sicherungssockel in horizontales Seitenansicht,
- Fig. 2:: in horizontaler Frontansicht.
- Fig. 3:: in der Aufsicht,
- Fig. 4:: in einem vertikalen Halb-Schnitt entlang der vertikalen Mitfelebene, also entlang der Linie A-A in Fig. 3.
- Fig. 5:: einen vertikalen Schnitt hierzu um 90° gedreht, entlang der Linie B-B, und
- Fig. 6:: eine Aufsicht von unten auf den Hauptkörpers des Sicherungssockels alleine.

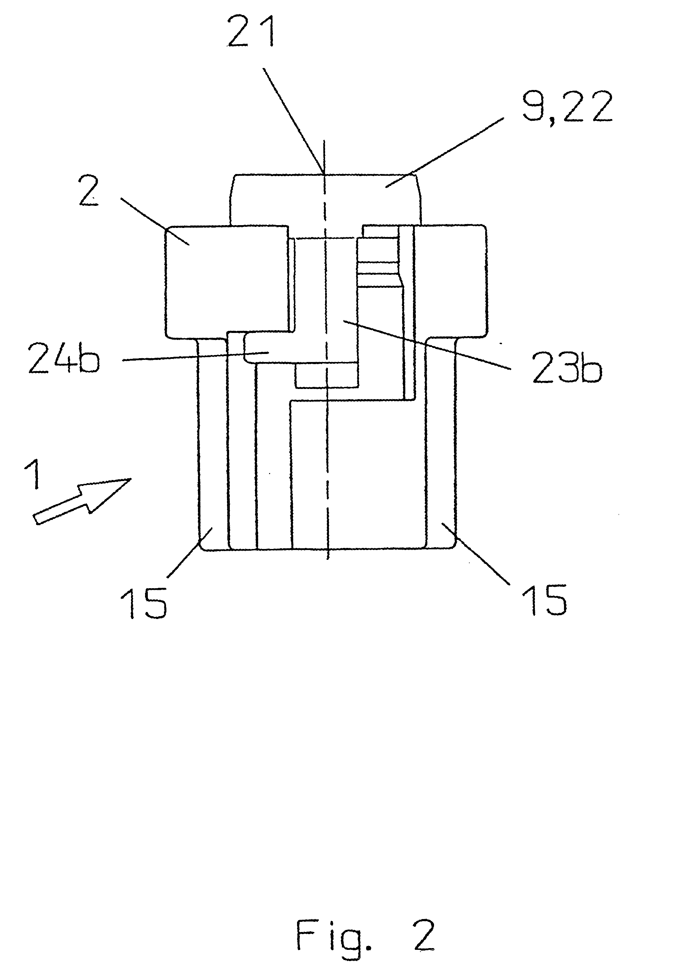

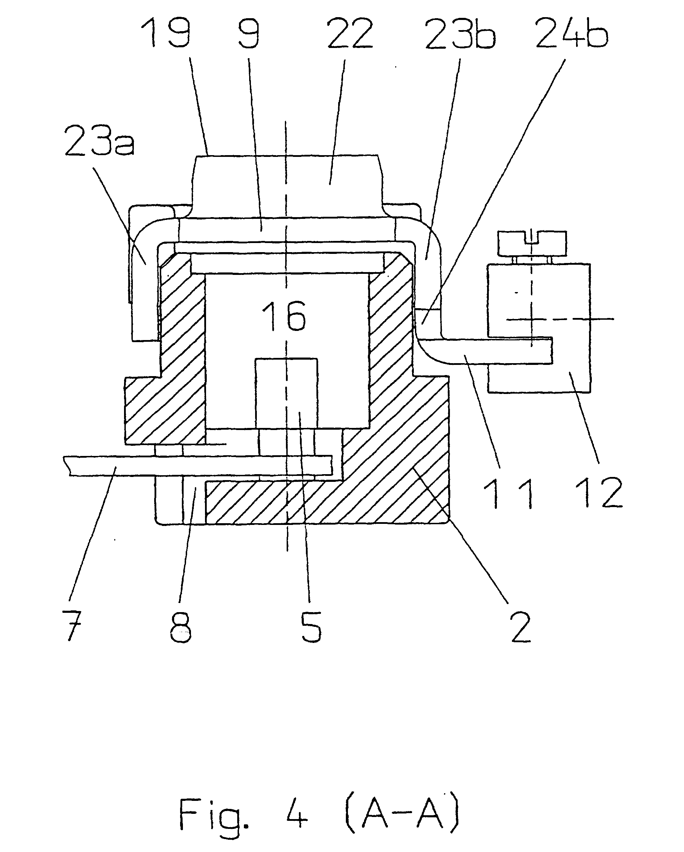

In den Figuren 1 - 4 ist der Sicherungssockel, bestehend aus dem Hauptkörper 2 und den daran bereits befestigten separaten Teilen, nämlich der Gewindehülse 9. der Wellscheibe 10 dargestellt. In Fig. 4 ist zusätzlich an der Abgangsfahne 11 der Gewindehülse 9 eine Abgangsklemme 12 zum Verklemmen des elektrischen Abgangs eingezeichnet.

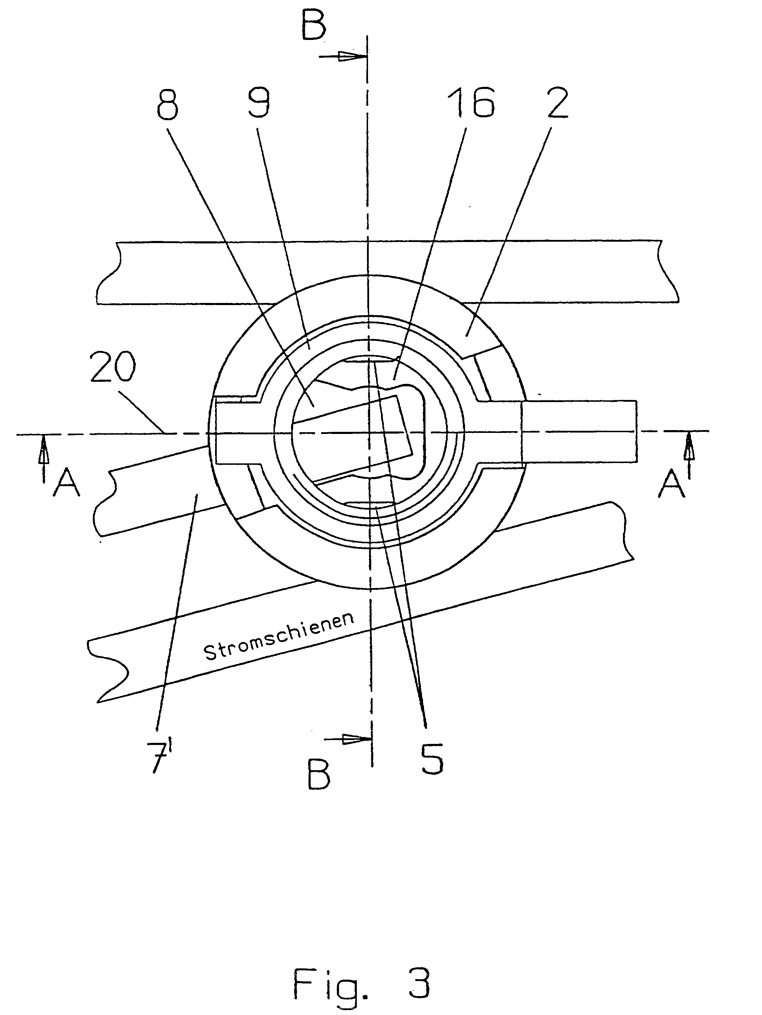

In den Figuren 3 und 4 sind zusätzlich die Fußkontaktschienen 7 eingezeichnet, die den elektrischen Zugang darstellen. indem diese Fußkontaktschienen mit ihrem einen Ende durch die Schienenöffnung 8 ins Innere des Hauptkörpers in den unteren Bereich des Sicherungsraumes 16 hineinragen, und der Sicherungseinsatz mit seinem unteren Ende direkt die Oberseite der Fußkontaktschiene 7 kontaktiert.

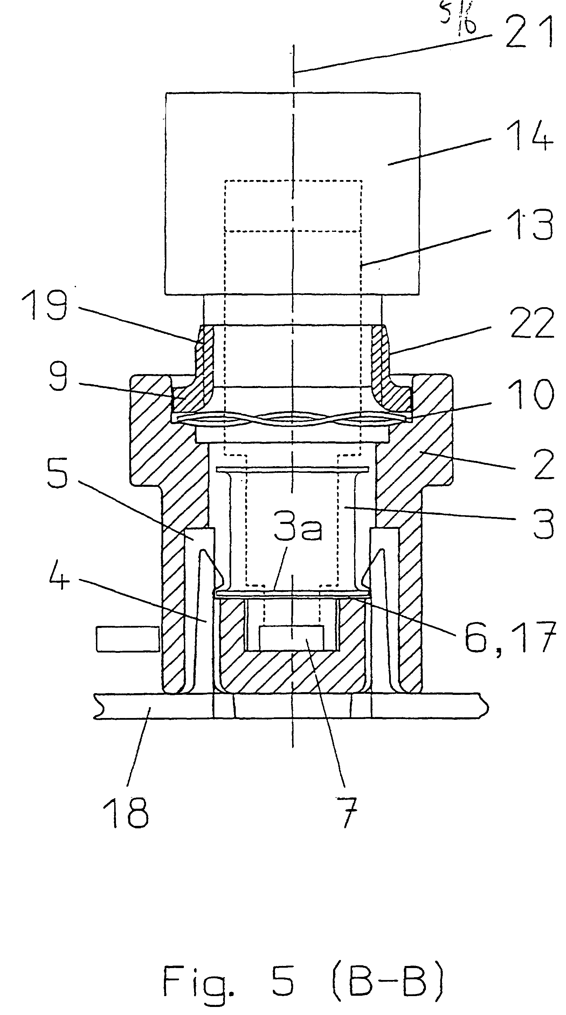

In Fig. 5 ist eine fertig montierte Sicherung, also mit eingesetztem Sicherungseinsatz 13 und einer den Sicherungseinsatz 13 haltenden Schraubkappe 14, welche am Gewindeteil 22 der Gewindehülse 9 verschraubt ist, in dem im Einbaublock 18 montierten Zustand dargestellt.

Wie am besten in den Figuren 4 und 5 zu erkennen, ist der Hauptkörper 2, der vorzugsweise aus Keramik oder Porzellan besteht, topfförmig ausgebildet mit relativ großen Wandstärken entsprechend dem Material dieses Hauptkörpers 2.

Die Grundform eines Topfes wird bezüglich des von oben her zugänglichen Sicherungsraum 16 im Inneren des Hauptkörpers mehrfach durchbrochen:

Zum einen durch die bereits erwähnte Schienenöffnung 8, die sich durch die Wandung des Hauptkörpers 2 hindurch auf dessen Mittelebene 20 im unteren Bereich erstreckt. Diese Schienenöffnung 8 befindet sich in einer solchen Höhe, daß die Fußkontaktschiene 7 horizontal in den Hauptkörper 2 eingeschoben werden kann, und auf dem Boden des Sicherungsraumes 16 aufliegt.

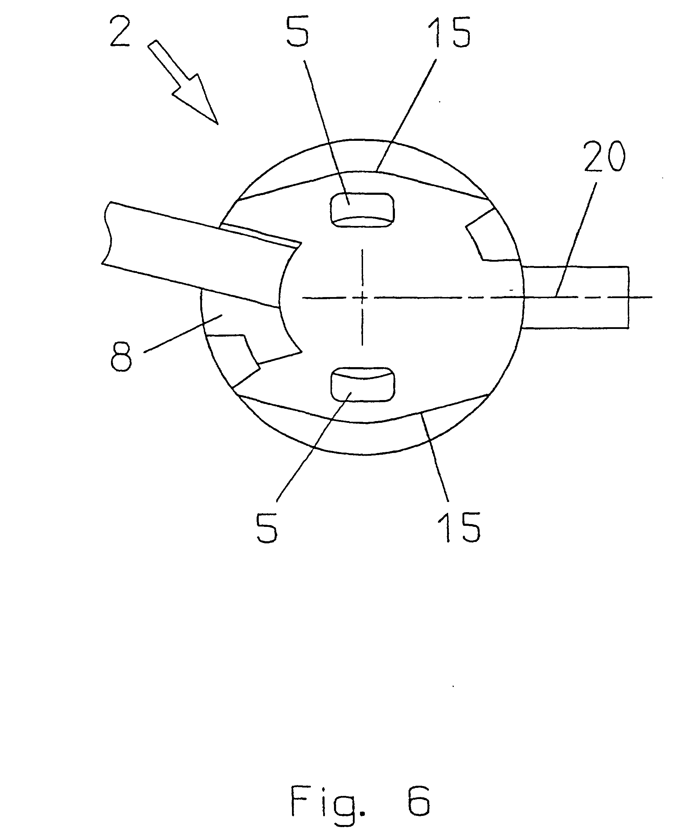

Wie am besten in der Aufsicht der Fig. 6, aber auch in Fig. 3, zu erkennen, ist die Schienenöffnung 8 so dimensioniert, daß - wie in Fig. 3 durch eine gestrichelte Fußkontaktschiene 7 angedeutet - diese Fußkontaktschiene 7 nicht in der Aufsicht fluchtend mit der Mittelebene 20 aus dem Hauptkörper 2 heraus verlaufen muß. sondern auch hierzu um einen Winkel bis zu ± 15° schräg angeordnet sein kann. Zu diesem Zweck ist - wie in Fig. 6 ersichtlich - die Schienenöffnung 8 nicht nur breiter als die Breite einer Fußkontaktschiene 7 ausgebildet, sondern vor allem auch V-förmig, sich nach außen hin erweiternd, geformt.

Weiterhin wird der Boden der topfförmigen Grundstruktur des Hauptkörpers 2 auf zwei gegenüberliegenden Seiten von Hakendurchbrüchen 5 durchbrochen, die so in den Seitenwänden münden, daß sie in den Innenumfangswänden des Sicherungsraumes 16 enden.

Oberhalb des Bodens des Sicherungsraumes 16, auf dem die Fußkontaktschiene 7 aufliegt, verläuft ein horizontaler Hülsensitz 6, der sich auf drei Seiten um die Schienenöffnung 8 herum erstreckt, dessen Durchmesser, vorgegeben durch den Innendurchmesser des Sicherungsraumes 16, dem Außendurchmesser einer dort axial aufzusetzenden Hülsenpaßeinsatzes 3 entspricht.

Im Bereich des oberen stirnseitigen Endes des Hülsensitzes 6 enden auch die Hakendurchbrüche 5, und sind zum Sicherungsraum 16 hin offen

Der Hülsenpaßeinsatz kann auf den Hülsensitz 6 aufgelegt werden, wobei dann wenigstens am unteren, vorzugsweise auch am oberen. Ende des Hülsenpaßeinsatzes ein sich radial nach außen erstreckender Flansch 3a radial über den äußeren Rand des Hülsensitzes 6 im Bereich der Hakendurchbrüche 5 vorsteht. Durch Aufdrücken eines Sicherungssockels, also mindestens nur des Hauptkörpers 2, auf ein tragendes Bauteil, etwa einen Einbaublock 18 wie in Fig. 5 dargestellt, bewegen sich Rasthaken 4, die vom Einbaublock 18 nach oben stehen und am oberen Ende nach innen, in den Sicherungsraum 16 hinein, weisende Rasthaken aufweisen, in die Hakendurchbrüche hinein.

Die Rasthaken 4 ragen dabei radial so weit nach innen, daß sie zumindest den Flansch 3a des Hülsenpaßeinsatzes 3 hintergreifen und damit auf dem Hülsensitz 6 halten.

Die etwas biegsamen Rasthaken 4 können auch etwas weiter radial nach innen ragen, und damit auch den Hülsensitz 6, also wenn dort noch kein Hülsenpaßeinsatz 3 aufgelegt ist, hintergreifen, und würden damit u. U. auch den Hauptkörper selbst am Einbaublock fixieren.

Dies geschieht jedoch primär durch ein auf den Einbaublock aufgesetztes Oberteil, welches den Sicherungssockel ebenfalls übergreift und am Einbaublock hält.

Eine formschlüssige Befestigung des Hauptkörpers am Einbaublock mittels der Rasthaken 4 ist ein Effekt, der bei entsprechender Ausbildung der Rasthaken 4 zusätzlich zum Halten des Hülsenpaßeinsatzes 3 auf dem Hülsensitz 6 auftritt.

In der Praxis wird selbstverständlich nicht der Hauptkörper 2 alleine, sondern der fertig montierte Sicherungssockel 1, also ausgestattet mit ggf. Hülsenpaßeinsatz 3, Wellscheibe 10 und Gewindehülse 9, auf die Rasthaken 4 und damit auf den Einbaublock 18 aufgedrückt und dort verrastet. Anschließend wird die Fußkontaktschiene 7 eingeschoben.

Da der Hülsenpaßeinsatz 3 somit gegenüber dem Hauptkörper 2 fixiert ist, muß hierfür kein separates Halteteil vorgesehen werden.

Die Gewindehülse ist durch einen Bajonettverschluß am Hauptkörper befestigbar.

Kernstück der Gewindehülse 9 ist deren Gewindeteil 22, welches aus einem zylindrischen, zu einem Gewinde verformten, Blechstück besteht, und dieses Gewindeteil 22 wird auf das obere stirnseitige Ende des Hauptkörpers 2 gesetzt, indem es in eine dort vorhandene stirnseitige Vertiefung, die etwas breiter als der Sicherungsraum 16 ist, eingesetzt wird.

An dem Gewindeteil 22 sind auf zwei diametral entgegengesetzten Seiten Befestigungsfortsätze 23a, 23b einstückig und aus stärkerem, nicht leicht verbiegbaren, Metall angeordnet, die sich vom unteren Ende des Gewindeteils 22 zunächst etwas radial nach außen und dann vertikal nach unten erstrecken.

An ihrem unteren Ende weisen diese Befestigungsfortsätze 23a, 23b jeweils einen vertikal bogenförmig in Umfangsrichtung, und zwar jeweils im gleichen Drehsinn weisende und identisch geformte Umfangsnase 24a, 24b auf, die Teil des Bajonettverschlusses sind.

Zusätzlich weist der eine Befestigungsfortsatz 23b eine radial und horizontal abstrebende Abgangsfahne 11 auf, welche zum Anordnen einer Abgangsklemme 12 zum Verklemmen eines elektrischen Abganges dient.

Die Befestigungsfortsätze 23a, 23b, die Umfangsnasen 24a, 24b sowie die Abgangsfahne 11 sind dabei aus einem mindestens 2 mm starken Blech gebogen und daher nur mit starkem Kraftaufwand verformbar.

Die obere Stirnfläche sowie äußere Umfangsfläche des Hauptkörpers 2 weist entsprechende vertikal sowie in Umfangsrichtung verlaufende, nach außen offene Aussparungen auf, um die Gewindehülse 9 mit ihren Befestigungsfortsätzen 23a. 23b und Umfangsnasen 24a, 24b vertikal von oben aufsetzen und durch Drehung der Gewindehülse 9 in Richtung der Umfangsnasen um ca. 15° - 20° nach Art eines Bajonettverschlusses mit dem Hauptkörper 2 durch Hintergreifen zu verriegeln.

Damit kann die Gewindehülse 9 nicht mehr vorn Hauptteil 2 vertikal abgehoben werden. Ein Rückdrehen der Gewindehülse gegenüber dem Hauptkörper wird dadurch verhindert, daß einerseits ein Verdrehen des Hauptkörpers des Sicherungssockels gegenüber dem ihn tragenden z. B. Einbaublock um die Vertikalrichtung 21 durch Formschluß verhindert ist, und andererseits auch ein Rückdrehen der Gewindehülse 9 gegenüber dem Hauptkörper 2 um diese Achse ebenfalls durch Formschluß verhindert ist, indem die auf die Abgangsfahne 11 der Gewindehülse 9 aufgeschobene Abgangsklemme 12 von oben formschlüssig in eine seitlich begrenzte Aussparung des tragenden Bauteiles, also z. B. des Einbaublocks, aufgenommen ist.

Zusätzlich wird auch durch die spätere Verklemmung der Abgangsfahne 11 mit einer Verdrahtung ein Rückdrehen behindert und weiterhin kann an der Gewindehülse 9 ein in eine entsprechende Aussparung, beispielsweise die Aussparung zum vertikalen Aufsetzen der Befestigungsfortsätze 23a, 23b mit geringerem Kraftaufwand hineinzubiegendes Formschlußelement angeordnet sein.

Die Abflachungen 15 am Außenumfang des Hauptkörpers 2 in dessen unteren Bereich, etwa den unteren zwei Dritteln. dienen dazu, um an dem Sicherungssockel - wie in Fig. 3 angedeutet - andere Stromschienen möglichst nahe vorbeiführen zu können. Zu diesem Zweck sind die Abflachungen 15 auf zwei diametral zur Mittelebene 20 liegenden Seiten konvex V-förmig ausgebildet, um nicht nur- parallel zur Mittelebene 20 verlaufende Stromschienen, sondern auch hierzu schräg verlaufende Stromschienen, wie in Fig. 3, oberer Teil, ersichtlich, nahe entlangführen zu können.

Die Hakendurchbrüche 5 befinden sich ebenfalls diametral zur Mittelebene 20 gegenüberliegend im Scheitelbereich der V-förmigen Abflachungen 15, können demgegenüber jedoch auch bezüglich der Mitte des Hauptkörpers 2 um 10-20° versetzt angeordnet werden, um dadurch in einen Bereich größerer Wandstärke zu gelangen.

## Patentansprüche

1. Sicherungssockel, insbesondere zum Anordnen in einem Einbaublock eines Anschlußkastens, mit
- einem isolierenden Hauptkörper (2) mit einem nach oben offenen Sicherungsraum (16),
- einer Gewindehülse (9),
- einer Schienenöffnung (8) im Hauptkörper (2) zum seitlichen Einführen einer Fußkontaktschiene (7) in den unteren Bereich des Sicherungsraumes (16), und
- einen Hülsenpaßeinsatz (3), der in den Sicherungsraum (16) einsetzbar ist,
**dadurch gekennzeichnet, daß**
der Hauptkörper (2) nach außen, insbesondere nach unten sowie zum Sicherungsraum (16) hin offene Hakendurchbrüche (5) aufweist, und der in den Sicherungsraum (16) eingesetzte Hülsenpaßeinsatz (3) einen radial nach außen vorstehenden Flansch (3a) aufweist, welcher von in die Hakendurchbrüche (5) hineinragenden Rasthaken (4), welche vom aufnehmenden Bauteil abragen, hintergriffen wird und damit den Hülsenpaßeinsatz (3) bezüglich des Hauptkörpers (2) positionieren.

2. Sicherungssockel nach Anspruch 1,
**dadurch gekennzeichnet, daß**
der Hülsenpaßeinsatz (3) auf einem horizontalen Hülsensitz (6) des Hauptkörpers aufliegt, und mittels der Rasthaken (4) an diesem angeordnet gehalten ist.

3. Sicherungssockel nach Anspruch 1 oder 2,
**dadurch gekennzeichnet, daß**
die Schienenöffnung (8) lediglich zur Mantelfläche des Hauptkörpers (2) hin offen, zum stimseitigen unteren Ende des Hauptkörpers (2) jedoch geschlossen und von dem Hauptkörper (2) gegenüber der Umgebung getrennt ist.

4. Sicherungssockel nach einem der vorhergehenden Ansprüche,
**dadurch gekennzeichnet, daß**
sich zwei Hakendurchbrüche (5) beidseits des Hülsensitzes (6) symmetrisch befinden.

5. Sicherungssockel nach einem der vorhergehenden Ansprüche,
**dadurch gekennzeichnet, daß**
die Schienenöffnung (8) so dimensioniert ist, daß die Fußkontaktschiene (7) unter Winkelabweichung gegenüber der vertikalen Mittelebene (20) in den Hauptkörper (2) eingeführt werden kann.

6. Sicherungssockel nach Anspruch 5,
**dadurch gekennzeichnet, daß**
die mögliche Winkelabweichung ± 45°, insbesondere ± 20°, insbesondere ± 15° von der Mittelebene (20) beträgt.

7. Sicherungssockel nach einem der vorhergehenden Ansprüche,
**dadurch gekennzeichnet, daß**
die Gewindehülse (9) mittels Bajonettverschluß auf dem oberen Ende des Hauptkörpers (2) befestigbar ist.

8. Sicherungssockel nach einem der vorhergehenden Ansprüche,
**dadurch gekennzeichnet, daß**
die Gewindehülse (9) nach Aufsetzen auf das obere Ende des Hauptkörpers (2) durch Einbiegen von Laschen in Aussparungen des Hauptkörpers (2) gegenüber diesem fixierbar ist.

9. Sicherungssockel nach Anspruch 7,
**dadurch gekennzeichnet, daß**
die Gewindehülse (9) zwei in Vertikalrichtung (21) vertikal nach unten gerichtete Befestigungsfortsätze (23a, 23b) aufweist, an deren unteren Ende in die gleiche Umfangsrichtung abstrebende Umfangsnasen (24a, 24b) abstreben.

10. Sicherungssockel nach Anspruch 9,
**dadurch gekennzeichnet, daß**
von einem der Befestigungsfortsätze (23b) radial nach außen eine Abgangsfahne (11) abragt.

11. Sicherungssockel nach Anspruch 10,
**dadurch gekennzeichnet, daß**
ein Gewindeteil (22), die Befestigungsfortsätze (23a, 23b), die Umfangsnasen (24a, 324b) sowie die Abgangsfahne (11) einstückig miteinander die Gewindehülse (9) bilden.

12. Sicherungssockel nach einem der vorhergehenden Ansprüche,
**dadurch gekennzeichnet, daß**
im montierten Zustand zwischen der Gewindehülse (9) und dem Hauptkörper (2) eine ringförmige, in Vertikalrichtung (21) auf Druck belastbare Wellscheibe (10) eingelegt ist.

13. Sicherungssockel nach einem der vorhergehenden Ansprüche,
**dadurch gekennzeichnet, daß**
der Hauptkörper (2) symmetrisch beidseits der Mittelebene (20) wenigstens in seinem unteren Bereich Abflachungen (15) des Außenumfanges aufweist.

14. Sicherungssockel nach Anspruch 13,
**dadurch gekennzeichnet, daß**
die Abflachungen im Außenbereich im Schnitt quer zur Vertikalrichtung konvex V-förmig ausgebildet sind.

15. Sicherungssockel nach Anspruch 13 oder 14,
**dadurch gekennzeichnet, daß**
die Abflachungen (15) von unten wenigstens bis zur Oberkante der Abgangsfahne (11) der Gewindehülse (9) im montierten Zustand nach oben reichen.

## Claims

1. Fuse cap, in particular for arranging a branch box inside an assembling block, with
- an insulator main body (2) having an outwards open space for the fuse (16),
- a screwed sleeve (9),
- a main body (2) bored hole for rail (8) for laterally inserting a contact foot rail (7) into the lower area of the fuse space (16), and
- an adjusting piece of the sleeve (3) which may be inserted into the fuse space (16), **characterised in that** the main body has outwards opened hook slots (5), in particular towards the lower area as well as towards the fuse space (16), and the adjusting piece of the sleeve (3) inserted into the fuse space (16) has a radially jutting pad (3a) which is to be griped behind by the locking hooks (4) which penetrate the hook slots (5) and protrude from the supporting part, thus positioning the adjusting piece of the sleeve (3) in respect of the main body (2).

2. Fuse cap according to claim 1, **characterised in that** the adjusting piece of the sleeve (3) is arranged on a main body sleeve seat (6) and held there by means of the locking hooks (4).

3. Fuse cap according to claim 1 or 2, **characterised in that** the rail hole (8) is opened exclusively towards the lateral surface of the main body (2), being closed towards the lower frontal end of the main body (2) and environmentally sealed by the main body (2).

4. Fuse cap according to any one of the preceding claims, **characterised in that** the two hook slots (5) are symmetrically arranged on both sides of the sleeve seat (6).

5. Fuse cap according to any one of the preceding claims, **characterised in that** the rail hole (8) is thus dimensioned that the contact foot rail (7) may be inserted into the main body (2) by an angular displacement in respect of the vertical median plane (20).

6. Fuse cap according to claim 5, **characterised in that** the possible angular displacement in respect of the median plane (20) is between ±45°, in particular ±20°, in particular ±15°.

7. Fuse cap according to any one of the preceding claims, **characterised in that** the screwed sleeve (9) may be arranged on the upper end of the main body (2) by means of a slide catch.

8. Fuse cap according to any one of the preceding claims, **characterised in that** after its arrangement on the upper end of the main body (2), the screwed sleeve (9) may be attached to it by bending some clips into external notches of the main body (2).

9. Fuse cap according to claim 7, **characterised in that** in the vertical direction (21), the screwed sleeve (9) has two downwards vertically orientated attaching extensions (23a, 23b), against whose lower ends, bearing against the same circumference direction, the circumference beaks (24a, 24b) are bearing.

10. Fuse cap according to claim 9, **characterised in that** an outlet terminal (11) juts radially from one of the attaching extensions (23b).

11. Fuse cap according to claim 10, **characterised in that** a screwed piece (22), the attaching extensions (23a, 23b), the circumference beaks (24a, 24b), as well as the outlet terminal (11), all together forming a single body, are making up the screwed sleeve (9).

12. Fuse cap according to any one of the preceding claims, **characterised in that** once assembled, an elastic annular corrugated rove (10) is arranged in the vertical direction (21) between the screwed sleeve (9) and the main body (2).

13. Fuse cap according to any one of the preceding claims, **characterised in that** symmetrically, on both sides of the median plane (20) and at least in its lower area, the main body (2) has external circumference flattening (15).

14. Fuse cap according to claim 13, **characterised in that** in the external area, in a cross section in respect of the vertical direction, the flattening have a convex, V shape.

15. Fuse cap according to claim 13 or 14, **characterised in that** once assembled, the flattening (15) is upwards reaching at least the upper rim of the screwed sleeve (9) outlet terminal (11).

## Revendications

1. Socle de coupe-circuit, spécialement pour la disposition dans un bloc de montage d'une boîte de jonction, avec:
- un corps de logis (2) isolant, avec un espace pour coupe-circuit (16), ouvert vers la partie supérieure,
- un manchon fileté (9),
- une ouverture (8) dans le corps de logis (2) pour l'introduction de la part latérale à un rail à contact de pied (7) dans la partie inférieure de l'espace pour coupe-circuit (16), et
- une douille de guidage (3) qui est assise dans l'espace pour coupe-circuit (16) **caractérisé en ce que**, le corps de logis (2) présente des brèches pour les serrures de battant (5), qui sont ouvertes vers l'extérieur et spécialement vers la partie inférieure aussi bien que vers l'espace pour coupe-circuit (16) et la douille de guidage (3), qui est assise dans l'espace pour coupe-circuit est prévue avec une joue (3a) saillie en dehors en direction radiale, qui sera empoignée par derrière par les serrures de battant (4) qui entrent dans les breches (5) et qui sortent de l'élément constructif portant et par ça la douille de guidage (3) sera positionnée par rapport au corps de logis (2).

2. Socle de coupe-circuit selon la revendication 1, **caractérisé en ce que**, la douille de guidage (3) est assise sur un siège horizontal de la douille (6), part du corps de logis et par l'entremise des serrures de battant (4) est fixée sur celui-ci.

3. Socle de coupe-circuit selon la revendication 1 ou 2, **caractérisé en ce que** l'ouverture pour le rail (8) est seulement vers la surface latérale du corps de logis (2), étant fermée vers le bout inférieur, frontal du corps de logis (2) et par rapport au corps de logis (2), l'ouverture est séparée dans le voisinage de celui-ci.

4. Socle de coupe-circuit selon l'une des revendications antérieures, **caractérisé en ce que** les deux brèches pour les serrures de battant (5) se trouvent en position symétrique sur les deux parties du siège de la douille (6).

5. Socle de coupe-circuit selon l'une des revendications antérieures, **caractérisé en ce que** l'ouverture pour le rail (8) est dimensionnée de sorte que le rail à contact de pied (7) puisse être introduit dans le corps de logis (2) par déviation angulaire envers le plan médian vertical (20).

6. Socle de coupe-circuit selon la revendication 5, **caractérisé en ce que** la déviation angulaire possible par rapport au plan médian (20) est entre ±45°, spécialement ±20°, spécialement ±15°.

7. Socle de coupe-circuit selon l'une des revendications antérieures, **caractérisé en ce que** le manchon fileté (9) peut être fixé sur l'extrémité supérieure du corps de logis (2) par l'entremise d'une fermeture à baïonnette.

8. Socle de coupe-circuit selon l'une des revendications antérieures, **caractérisé en ce que** après le positionnement sur l'extrémité supérieure du corps de logis (2), le manchon fileté (9) peut être fixé de celui-ci par le pliage d'éclisses introduite dans les dégagements du corps de logis (2).

9. Socle de coupe-circuit selon la revendication 7, **caractérisé en ce que** le manchon fileté (9) présente dans la direction verticale (21) deux prolongements de fixation (23a, 23b) dirigés verticalement en bas sur lesquels bouts inférieurs s'appuient dans la même direction périphérique sur la circonférence les nez (24a, 24b).

10. Socle de coupe-circuit selon la revendication 9, **caractérisé en ce que** à l'un des prolongements de fixation (23 b), sort en direction radiale vers l'extérieur une borne de sortie (11).

11. Socle de coupe-circuit selon la revendication 10, **caractérisé en ce que** une partie filetée (22) les prolongements de fixation (23a, 23b), les nez de circonférence (24a, 24b) aussi bien que la borne de sortie 11) forment ensemble un seul corps, c'est à dire le manchon fileté (9).

12. Socle de coupe-circuit selon l'une des revendications antérieures, **caractérisé en ce que** dans l'état monté, entre le manchon fileté (9) et le corps de logis (2) se trouve une rondelle ondulée (10), annulaire sur laquelle agit dans la direction verticale (21) une charge de compression.

13. Socle de coupe-circuit selon l'une des revendications antérieures, le corps de logis (2) présente de manière symétrique sur les deux parties du plan médian (20) au moins dans la zone inférieure de celui-ci des matages (15).

14. Socle de coupe-circuit selon la revendication 13, **caractérisé en ce que** les matages, dans la zone extérieure, dans la section transversale par rapport à la direction verticale, ont la forme de la lettre V-convexe.

15. Socle de coupe-circuit selon la revendication 13 ou 14, les matages (15), dans l'état monté arrivent de bas en haut au moins jusqu'au flanc supérieur de la borne de sortie (11) du manchon fileté (9).
